# EUROPÄISCHE PATENTSCHRIFT

(11) **EP 3 314 036 B1**
(45) Veröffentlichungstag und Bekanntmachung des Hinweises auf die Patenterteilung: **12.08.2020**
(21) Anmeldenummer: 16738686.1
(22) Anmeldetag: 23.06.2016
(51) Int. Cl.: C23C 22/77, G01N 25/72

(54) **WÄRMEBILDÜBERWACHUNG DER NASSBESCHICHTUNG EINER OBERFLÄCHE EINES METALLBANDES**
METHOD FOR COATING A SURFACE OF A METAL STRIP AND A METAL STRIP-COATING DEVICE
PROCÉDÉ DE REVÊTEMENT D'UNE SURFACE D'UNE BANDE MÉTALLIQUE AINSI QUE DISPOSITIF DE REVÊTEMENT D'UNE BANDE MÉTALLIQUE

(30) Priorität: 25.06.2015 DE 102015211853
(43) Veröffentlichungstag der Anmeldung: 02.05.2018
(73) Patentinhaber: ThyssenKrupp Steel Europe AG, 47166 Duisburg (DE); thyssenkrupp AG, 45143 Essen (DE)
(72) Erfinder: MÖLLER,Thomas, 47199 Duisburg (DE); NEERFRIES, Arno, 46535 Dinslaken (DE); ROGNER, Ingo, 85049 Ingolstadt (DE)
(74) Vertreter: ThyssenKrupp Steel Europe AG
(86) Internationale Anmeldenummer: PCT/EP2016/064614
(87) Internationale Veröffentlichungsnummer: WO 2016/207315

(56) Entgegenhaltungen:
- WO-A2-2009/112452
- JP-A- H11 281 603
- JP-A- 2008 014 959
- JP-A- 2013 134 217
- MICHAEL J. HAUGH ET AL: "Paint skip detector", OPTICAL SENSING II, Bd. 1313, 1. März 1990 (1990-03-01), Seiten 190-199, XP55317786, 1000 20th St. Bellingham WA 98225-6705 USA ISSN: 0277-786X, DOI: 10.1117/12.21934 ISBN: 978-1-62841-971-9

## Beschreibung

Die Erfindung betrifft ein Verfahren gemäß Oberbegriff des Anspruchs 1 und eine Vorrichtung gemäß Oberbegriff des Anspruchs 12.

Metallbänder werden üblicherweise beschichtet, um gewünschte Funktionalitäten, insbesondere an der Oberfläche der Metallbänder, herbeiführen zu können. Je nach Art, Beschaffenheit sowie gewünschter Funktionalität der Oberfläche werden unterschiedliche Vorbehandlungsverfahren angewendet. Häufige wichtige gewünschte Ziele der Oberflächenbehandlungen sind eine Reinigung der zu beschichtenden Oberfläche, ein Versehen der Oberfläche mit einem Korrosionsschutz, einer optimalen Haftvermittlung zwischen Oberfläche und nachfolgender Beschichtung sowie beispielsweise ein Versehen der Oberfläche mit einer sonstigen Funktionsbeschichtung. Zunehmende Anforderungen an die Metallbänder, unter anderem hinsichtlich ihrer mechanischen und thermischen Stabilität, beispielsweise bei Umformprozessen mit hoher Umformungsbelastung, erfordern eine sehr hohe Qualität der Beschichtungen hinsichtlich ihrer Haftung auf den behandelten Oberflächen. Aus diesem Grund ist beispielsweise bei Vorbehandlungsschichten eine gleichmäßige und lückenlose Auftragung erforderlich, um für nachfolgende Beschichtungen der Oberfläche eine durchgehende und gute Haftung zu gewährleisten. In diesem Zusammenhang hat die Prüfung der beschichteten Oberflächen eine hohe Bedeutung, um Beschichtungsfehler ausschließen zu können oder weitgehend ausschließen zu können.

Eine bekannte Methode zur Prüfung der Qualität von aufgetragenen Beschichtungen, beispielsweise mittels Walzauftrages aufgetragener Beschichtungen, ist eine Analytik der beschichteten Oberflächen mittels Infrarotstrahlung zur NIR-Analytik, wobei NIR die Abkürzung für einen Wellenlängenbereich der verwendeten Infrarotstrahlung ist. Die mit derartigen Verfahren typischerweise vorgenommenen Messungen weisen jedoch den Nachteil auf, dass bei unterschiedlichen Beschichtungen starke Unterschiede in den Infrarotspektren erhalten werden, wodurch die Auswertung der Infrarotspektren einen hohen Aufwand erfordert. Ein weiterer Nachteil der NIR-Analytik ist häufig, dass eine Messung einzelner Punkte, beispielsweise eine traversierende Punktmessung, erfolgt. Hierdurch ist der Nachteil gegeben, dass eine lückenlose Überwachung der Beschichtung nicht möglich ist. Dieses Messverfahren ist somit nicht ausreichend für Anwendungsbereiche, in denen Oberflächen ohne Beschichtungsfehler oder weitgehend ohne Beschichtungsfehler benötigt werden.

Ein Beispiel für ein Verfahren zur Beschichtung eines Metallbands ist in der WO 2009/112452 dargestellt. Das erläuterte Verfahren umfasst hierbei eine Erfassung von IR-spektroskopischen Messdaten auf Grundlage von Fourier-Transformations-IR-Spektroskopie. Zwar ist eine kontinuierliche Erfassung während der Beschichtung des Metallbands möglich, als Nachteil erweisen sich jedoch bei dem beschriebenen Verfahren zum einen die verfahrensbedingte Notwendigkeit einer vergleichsweise komplexen Auswertung der gemessenen Spektren, zum anderen die durch die gewählte Spektrometergattung begrenzte Flächenabdeckung.

Ein Verfahren zur Ermittlung von Defekten in einer Oberfläche eines sich bewegenden Materials, insbesondere eines Metallbands, ist der WO 2010/033113 zu entnehmen. Das erläuterte Verfahren umfasst ein Erwärmen des Metallbands mit einer nachgeschalteten Thermographie. Das beschriebene Verfahren ist aufgrund des erforderlichen Prozesses einer aktiven Erwärmung jedoch aufwendig und erlaubt daher nicht oder allenfalls mit massivem Aufwand eine lückenlose Kontrolle der Oberflächenqualität der beschichteten Oberfläche.

Eine Nassbeschichtungsvorrichtung für Kunststofffolien, umfassend eine Nassbeschichtungsstation und eine Wärmebildkamera, ist der JP2013134217A zu entnehmen.

Aufgabe der Erfindung ist daher, ein Verfahren zur Beschichtung einer Oberfläche eines Metallbandes, zur Verfügung zu stellen, wobei das Verfahren eine, bevorzugt sowohl hinsichtlich der Flächenabdeckung als auch hinsichtlich der zeitlichen Dimension lückenlose Kontrolle der Oberflächenqualität der beschichteten Oberfläche ermöglicht.

Die Aufgabe wird mit einem Verfahren zur Beschichtung einer Oberfläche eines Metallbandes mit den Merkmalen des Anspruchs 1 und mit einer Metallbandbeschichtungsvorrichtung mit den Merkmalen des Anspruches : 12 gelöst. Weitere vorteilhafte Ausgestaltungen und Weiterbildungen gehen aus der nachfolgenden Beschreibung hervor.

Es ist ein Verfahren zur Beschichtung einer Oberfläche eines Metallbands vorgeschlagen. Das Verfahren weist die folgenden Schritte auf:
- Beschichten der Oberfläche des Metallbands mit einer Nassbeschichtung mittels einer Beschichtungsstation,
- Befördern des Metallbands mittels einer Metallbandbeförderungsvorrichtung,
- Erfassung mit der Nassbeschichtung beschichteten Oberfläche mittels einer Anfertigung
einer Wärmeabbildung eines Erfassungsbereiches, der einen Teil der Oberfläche umfasst, wobei der Erfassungsbereich unmittelbar hinter der Beschichtungsstation befindlich ist, bevorzugt der Erfassungsbereich die Beschichtungsstation wenigstens teilweise umfasst.

Der Begriff des Metallbands umfasst hierbei Metallbänder aus beliebigen metallischen Materialien. In einer Ausgestaltung des Verfahrens kann das Metallband insbesondere als Stahlband ausgebildet sein.

Eine gängige Möglichkeit des Beschichtens der Oberfläche eines Metallbandes mit einer Nassbeschichtung erfolgt mittels einer Beschichtungsstation. Eine derartige Beschichtungsstation ist typischerweise derart ausgebildet, dass das Band durch die Beschichtungsstation durchläuft und mittels der Beschichtungsstation mit der Nassbeschichtung beschichtet wird. Bei der Nassbeschichtung kann es sich beispielsweise um Funktionsbeschichtungen handeln, wobei beliebige Funktionen, wie beispielsweise optische oder dekorative Funktionalitäten oder Korrosionsschutzfunktionalitäten, aber auch andere Funktionalitäten, mittels der Beschichtung bereitgestellt werden können. Weitere Beispiele für mögliche Funktionalitäten sind Schutz vor Verschmutzung oder vor Verzunderung von Oberflächen.

Eine Erfassung der mit der Nassbeschichtung beschichteten Oberfläche erfolgt mittels einer Anfertigung einer Wärmabbildung. Es wird hierbei eine Wärmeabbildung eines Bereichs angefertigt, wobei der Bereich einen Teil der Oberfläche umfasst. Es wird somit eine zweidimensionale Temperaturverteilung des durchlaufenden Metallbandes unmittelbar nach der Benetzung der Bandoberfläche vorgenommen. Bei einer Beschichtungsstation, welche eine Benetzung der Bandoberfläche mittels Auftragsrollen vornimmt, erfolgt die Ermittlung der zweidimensionalen Temperaturverteilung des durchlaufenden Metallbands unmittelbar nach der Benetzung der Bandoberfläche durch die Auftragsrollen.

Es kann hierbei eine Wärmestrahlung erfasst werden, die von dem Metallband und/oder seiner Beschichtung emittiert wird. Es kann ebenfalls eine Wärmestrahlung erfasst werden, die von dem Metallband und/oder seiner Beschichtung reflektiert wird.

Eine Anfertigung einer Wärmeabbildung kann beispielsweise mittels einer Wärmebildkamera erfolgen. Eine Wärmebildkamera, gelegentlich auch als Thermografie-, Thermal- oder Infrarotkamera bezeichnet, bezeichnet ein bildgebendes Gerät, welches auf dem Empfang von Infrarotstrahlung basiert. Die Nutzung einer Wärmebildkamera hat insbesondere den Vorteil zur Folge, dass eine zweidimensionale Wärmeabbildung erfasst werden kann. Weiterhin bietet die Wärmebildkamera den Vorteil die zweidimensionale Wärmeabbildung, sofern gewünscht, auch in Echtzeit zur Verfügung stellen zu können. Die räumliche Auflösung der Meßpunkte ist von der Art und Anbringung der Wärmebildkamera abhängig und kann auch unter einen Quadratmillimeter betragen.

Der Begriff der Nassbeschichtung bezeichnet eine Beschichtung, welche während des Zeitpunktes der Beschichtung flüssig ist. Der flüssige Zustand der Nassbeschichtung kann beispielsweise daher resultieren, dass die Nassbeschichtung wasserbasiert bereitgestellt wird. Es kann aber beispielsweise auch vorgesehen sein, dass eine ölbasierte Nassbeschichtung zur Verfügung gestellt wird. Ebenso kann beispielsweise vorgesehen sein, dass ein Anteil von Wasser oder Öloder einer anderen flüssigen Substanz in der Nassbeschichtung enthalten sind. Ebenfalls können auch lösemittelbasierende Nassbeschichtungen vorgesehen sein. Als Lösemittel können beispielsweise anorganische oder organische Flüssigkeiten oder auch Flüssigkeiten mit gelösten anorganischen oder organischen Stoffen vorgesehen sein.

Die Unterschiede der Emissivität der Nassbeschichtung und der Emissivität des beschichteten Metallbandes resultiert darin, dass die Nassbeschichtung auf der mittels der Wärmebildkamera aufgenommenen Wärmeabbildung in einer anderen Temperaturdarstellung erscheint als das Metallband, obwohl die Nassebschichtung und das Metallband in etwa die gleiche Temperatur aufweisen.

Wesentlicher Vorteil der Erfassung der Wärmeabgabe der mit der Nassbeschichtung beschichteten Oberfläche ist, dass eine durchgehende zweidimensionale, berührungslose und auch in Echtzeit erfolgende Kontrolle des beschichteten Metallbandes erfolgen kann. Insbesondere wird durch das erläuterte Verfahren ermöglicht, dass eine vollflächige, lückenlose Qualitätskontrolle eines gesamten den Beschichtungsprozess durchlaufenden Metallbands erfolgen kann. Im Gegensatz zu der ansonsten notwendigen Erfassung nur an punktuellen Stellen, beispielsweise auch in Form von traversierenden punktuellen Messungen, ist ebenfalls der Vorteil gegeben, dass eine lückenlose Überwachung des gesamten den Erfassungsbereich durchlaufenden Metallbandes ermöglicht ist.

Da das Funktionsprinzip des beschriebenen Verfahrens einen signifikanten Unterschied in den Emissivitäten voraussetzt ist insbesondere ein Vorteil, dass das erläuterte Verfahren auch ohne externes Erwärmen des Substrats durchgeführt werden kann.

Es kann daher insbesondere vorgesehen sein, das Verfahren ohne gezieltes externes Erwärmen des Substrats durchzuführen.

Ein weiterer Vorteil des beschriebenen Verfahrens ist, dass Wärmebildkameras in gegenwärtig üblichen Produktionsbetrieben standardmäßig verwendet werden, wodurch zum einen eine vergleichsweise günstige Beschaffung und Benutzung gewährleistet ist und zum anderen auch die zur Benutzung erforderlichen apparativen Vorrichtungen sowie Kompetenzen in vielen Fällen bereits vorhanden sind.

In einer Ausgestaltung des Verfahrens kann beispielsweise vorgesehen sein, dass die Wärmeabbildung in einem Spektralbereich aufgenommen wird, der wenigstens eine Wellenlänge zwischen 1 Mikrometern und 20 Mikrometern umfasst, bevorzugt wenigstens eine Wellenlänge zwischen 7 Mikrometern und 20 Mikrometern umfasst. Der vergleichsweise langwellige Spektralbereich zwischen 7 µm und 20 µm weist hierbei den besonderen Vorteil auf, dass eine Vielzahl von Metallen einen sehr niedrigen Emissionsgrad in diesem Wellenlängenbereich aufweist, sodass der Unterschied zu der Emissivität von Nassbeschichtungen maximiert ist. Hierdurch wird eine besonders gute Auflösung der mit den beschriebenen Verfahren angefertigten Wärmeabbildungen erreicht, die selbst bei ungünstigen Messbedingungen noch zu zuverlässig auswertbaren Ergebnissen führen. Bei einer Vielzahl von metallischen Materialien wird der größte Kontrast im LW-Bereich, also zwischen 7 Mikrometern und 20 Mikrometern erreicht, sodass eine Nutzung von für den LW-Bereich des infraroten Spektrum geeigneten Wärmebildkameras besonders vorteilhaft ist und vorgesehen werden kann.

Da viele kommerziell verfügbare Wärmebildkameras eine Wärmeabbildung in einem Spektralbereich von 7 Mikrometern bis 14 Mikrometern abdeckt, kann in einer speziellen Ausgestaltung vorgesehen sein, dass die Wärmeabbildung einem Spektralbereich aufgenommen wird, der den gesamten Spektralbereich zwischen 7 Mikrometern und 14 Mikrometern umfasst.

Dieser Vorteil kommt besonders zum Tragen in Fällen, in denen eine Wärmeabbildung der noch nassen oder feuchten Nassbeschichtung aufgenommen wird, da die Emissivität von Wasser, Öl, Lösemitteln sowie anderen Flüssigkeiten deutlich höher ist als die Emissivität von Metallen innerhalb des erwähnten Spektralbereichs.

Die erfindungsgemäße Anordnung des Erfassungsbereiches unmittelbar hinter der Beschichtungsstation ist dahingehend zu verstehen, dass ein die Beschichtungsstation in einer Laufrichtung durchlaufendes Metallband bei dem Herauslaufen der Beschichtungsstation erfasst wird.

Hierdurch ergibt sich der Vorteil, dass der Nassfilm noch nass beziehungsweise feucht ist, wodurch aufgrund der erläuterten Unterschiede in den Emissivitäten entsprechend die gewünschte Abbildung von beschichteten und unbeschichteten Bereichen mittels der Wärmeabbildung enorm vereinfacht ist.

Auch bei unmittelbar nach der Beschichtung erfolgenden Messungen ist aufgrund in aller Regel vergleichbarer Ausgangstemperatur sowie aufgrund der bei dünnem Auftrag eines Nassfilmes geringen Wärmekapazität des Nassfilmes in etwa eine gleiche Temperatur von Nassfilm und Substrat vorliegend. Bereits qualitativ kann, selbst wenn die exakten Emissivitäten von Metallband und von Nassbeschichtung nicht bekannt sind, aufgrund des großen Unterschiedes der Emissivitäten, in der zweidimensionalen Darstellung der Wärmebildkamera unmittelbar identifiziert werden, an welchen Positionen Nassfilm vorhanden ist und an welchen Positionen kein Nassfilm vorhanden ist.

Eine weitere Ausgestaltung des Verfahrens kann beispielsweise vorsehen, dass der Erfassungsbereich die Beschichtungsstation wenigstens teilweise umfasst.

Ein Vorteil eines Erfassens eines Bereiches, der unmittelbar hinter der Beschichtungsstation befindlich ist unter gleichzeitigem wenigstens teilweisem Umfassen der Beschichtungsstation in dem Erfassungsbereich hat insbesondere auch den Vorteil zur Folge, dass zumindest Schritte des Prozesses der Beschichtung an sich dargestellt werden können. So kann beispielsweise der Moment eines Abhebens der Auftragsrolle, ein teilweises nasses Durchlaufen einer Heftnaht mit Feuchteresten des vorherigen Reinigungs- und Spülvorganges und/oder ein Wiederaufsetzen der Auftragsrolle dargestellt werden. Diese Darstellungen können hiernach beispielsweise mit der nachfolgenden Erfassung von Fehlern in der Beschichtung kontrolliert werden, sodass die Wärmeabbildung auch bei der Ursachensuche von vorliegenden Defekten hilfreich sein kann.

In einer Ausgestaltung kann vorteilhafterweise vorgesehen sein, dass der Erfassungsbereich eine gesamte Breitenerstreckung des Metallbandes umfasst. Hierdurch ist gewährleistet, dass die gesamte Oberfläche des Metallbands, beispielsweise hinsichtlich ihrer Qualität, abgebildet wird.

Eine weitere beispielhafte Ausbildung des Verfahrens kann beispielsweise vorsehen, dass die Wärmeabbildung als kontinuierlicher Wärmeabbildungsfilm erstellt wird. Der Vorteil eines kontinuierlichen Wärmeabbildungsfilms ist, dass eine Gesamtheit der Daten vorliegt, sodass entlang einer Länge des Metallbandes, bevorzugt entlang der Gesamtlänge des Metallbandes, eine entsprechende Abbildung aus dem Wärmeabbildungsfilm zugeordnet und/oder extrahiert sowie ausgewertet werden kann.

Eine weitere beispielhafte Ausgestaltung des Verfahrens kann vorsehen, dass ein Filmabschnitt des Wärmeabbildungsfilms einem Bandabschnitt des Metallbandes zuordenbar erstellt wird. Eine Zuordnung des Filmabschnitts des Wärmeabbildungsfilms zu einem Bandabschnitt des Metallbands kann beispielsweise erfolgen, indem eine Position des Metallbands als Funktion der Geschwindigkeit des Durchlaufes des Metallbands durch die Beschichtungsstation sowie der vergangenen Zeit seit Beginn der Beschichtung des Metallbandes einem laufendem Zeitstempels des Wärmeabbildungsfilms zugeordnet wird.

Es kann aber auch beispielsweise vorgesehen sein, dass auf dem Metallband optische Markierungen angebracht sind, welche eine Position darstellen und welche sodann mittels der Wärmeabbildung dargestellt werden. Hierdurch ergibt sich insbesondere der Vorteil, dass bei einer exsitu Auswertung des Wärmeabbildungsfilms eine ausgewertete Wärmeabbildung einer Position der Oberfläche des Metallbandes zugeordnet werden kann. So kann beispielsweise nach einer Auswertung einer Wärmeabbildung einem einer separaten Bandrolle, auch als Coil bezeichnet, beispielsweise eine entsprechende Fehleranzahl oder Fehlerqualitätsstufe zugeordnet werden.

Eine Ausgestaltung des Verfahrens kann vorsehen, dass eine kontinuierliche Abfrage der Wärmeabbildung auf eine Temperaturdifferenz hin erfolgt und bei einer Feststellung einer Temperaturdifferenz, die größer ist als eine Referenzdifferenz, einem Markierungswert ausgegeben wird, der einem Abschnitt des Substrates und/oder einem Substrat zugeordnet wird.

In einer weiteren Ausgestaltung des Verfahrens kann beispielsweise vorgesehen sein, dass eine kontinuierliche Abfrage der Wärmeabbildung auf eine Temperaturdifferenz hin erfolgt und bei einer Feststellung einer Temperaturdifferenz, die größer ist als eine Referenzdifferenz, einem Markierungswert ausgegeben wird, der einem Bandabschnitt des Metallbandes und/oder einer Bandrolle zugeordnet wird. Eine Zuordnen eines Bandabschnitts kann hierbei beispielsweise Lösungen umfassen, welche eine auf 1 m genaue Markierung gewährleisten. Eine derartige Markierung wie auch eine um einen Faktor 2 bis 4 genauere Markierung ist bereits mit üblichen Bandbeschichtungsanlagen problemlos erreichbar, wodurch eine Umsetzung mit nur geringem Umrüstungsaufwand erreicht werden kann.

Es kann auch eine Zuordnung von einer Kombination wenigstens zweier Markierungen vorgesehen sein, wobei eine erste Markierung einer Bandrolle und eine zweite Markierung einem Bandabschnitt zugeordnet ist.

Der Begriff der kontinuierlichen Abfrage umfasst hierbei insbesondere auch quasi-kontinuierliche Abfragen, das bedeutet, dass auch wiederholte Abfragen, zwischen denen gewisse Zeitabstände liegen, als kontinuierliche Abfragen bezeichnet sind. In speziellen Ausgestaltungen können beispielsweise diejenigen wiederholten Abfragen als kontinuierliche Abfragen bezeichnet werden, zwischen denen Zeitabstände von weniger als 0,1 s liegen. Der Begriff der Temperaturdifferenz bezieht sich auf Unterschiede angezeigter Temperaturen. Die angezeigten Temperaturen weisen hierbei, wie eingangs erläutert, nicht auf tatsächliche Temperaturen hin, sondern aufgrund der unterschiedlichen Emissivität der Nassbeschichtung und des Metallbandes auf eine Darstellung unterschiedlicher Temperaturen bei tatsächlich gleicher Temperatur. Die Temperaturdifferenz entspricht hierbei somit einem Beschichtungsfehler, der beispielsweise abhängig ist von der tatsächlichen Abweichung der Dicke der Nassbeschichtung von der beabsichtigten Dicke der Nassbeschichtung oder abhängig ist davon, ob eine beschichtete oder eine unbeschichtete Position ausgewertet wird.

Das Ausgeben eines Markierungswertes kann beispielsweise als Zuordnung eines Markierungswertes zu einer Position des Metallbands oder einem Bandabschnitt des Metallbands verstanden werden, beispielsweise in Form eines Listeneintrags. So kann beispielsweise eine eindeutige Zuordnung des Metallbands und/oder eine eindeutige Zuordnung des Bandabschnitts eines Metallbands mit dem Markierungswert hergestellt werden. Der Markierungswert kann beispielsweise ein binärer Wert sein, welcher lediglich ein Vorhandensein eines Fehlers in einem eineindeutig zugeordneten Bandabschnitt darstellt. Ebenso kann aber auch der Markierungswert eine qualitative Darstellung der Temperaturdifferenz bewirken, wodurch beispielsweise eine Größe für die quantitative Abweichung von einer Zieldicke der Nassbeschichtung oder auch ein Flächenmaß einer unbeabsichtigt unbeschichteten Stelle des Metallbandes quantitativ erfasst ist.

Somit kann beispielsweise vorgesehen sein, dass die Referenzdifferenz einer Absolutabweichung weniger als 5,0 Kelvin beträgt.

Ein besonderer Vorteil, der bei einer hintereinander erfolgenden Nassbeschichtung von Metallband-Coils, genutzt werden kann, ist, dass die Wärmeabbildung des unbeschichteten Bereichs im Übergangsbereich zwischen zwei Coils zur Justierung der Zuordnung einer angezeigten Temperaturskala zu einem unbeschichteten Bereich des Metallbands genutzt werden kann. Es kann insbesondere vorgesehen sein, eine Wärmeabbildung eines Übergangsbereichs zwischen einem ersten Metallband und einem zweiten Metallband für die Ermittlung einer Referenztemperatur zur weiter oben erläuterten Bestimmung der Referenzdifferenz bei der Auswertung des Wärmeabbildungsfilms des zweiten Metallbands zu nutzen.

In einer anderen Ausgestaltung des Verfahrens kann beispielsweise vorgesehen sein, dass die Referenzdifferenz einstellbar ist. Eine Möglichkeit zur Einstellung der Referenzdifferenz ermöglicht vorteilhafterweise, dass je nach vorliegenden Emissivitäten oder weiterer optischer oder sonstiger Begebenheiten die Empfindlichkeit des Messverfahrens auf ein jeweils erforderliches Maß herauf- oder herabgesetzt werden kann.

Eine weitere Ausbildung des Verfahrens sieht vorteilhafterweise vor, dass die kontinuierliche Abfrage in-situ erfolgt. Eine kontinuierliche in-situ Abfrage hat beispielsweise den Vorteil, dass unmittelbar nach der Vornahme der Nassbeschichtung der Oberfläche des Metallbands eine Qualitätsbewertung der Beschichtung möglich ist, sodass bereits zu diesem Zeitpunkt entsprechende Aktionen vorgenommen werden können, beispielsweise eine je nach Häufigkeit und/oder Ausmaß ggf. detektierter Fehler erfolgende Auswahl eines Lagerortes für das entsprechende beschichtete Metallband.

In einer weiteren vorteilhaften Ausgestaltung des Verfahrens kann beispielsweise vorgesehen sein, dass ein in dem Erfassungsbereich befindlicher Teil der Oberfläche des mit der Nassbeschichtung versehenen Metallbands mit einer Wärmequelle bestrahlt wird. Das Bestrahlen des Metallbands mit einer Wärmequelle in einem Bereich des Erfassungsbereiches hat zur Folge, die Wärmeabbildung eine Darstellung der Reflexion von Wärmestrahlung an der abgebildeten Oberfläche darstellt. Aufgrund der Korrelation des Relexionskoeffizienten eines Materials mit dem Transmissionskoeffizienten und dem Absorptionskoeffizienten ergibt sich aus einer derart vorgenommenen Wärmeabbildung eine gewissermaßen analoge Wärmeabbildung wie eine Wärmeabbildung einer unmittelbar Wärme abstrahlenden Oberfläche, wobei die auf beide Arten aufgenommenen Wärmeabbildungen gleichwertig und analog auswertbar sind. Dieses Verfahren hat insbesondere den Vorteil, dass die Wärmeabstrahlung ohne Erhitzen des Metallbands erfolgen kann. Die Ausnutzung der Wärmeabbildung der reflektierten Wärmestrahlung zur Wärmeabbildung des Metallbands, beispielsweise zur Detektion von Beschichtungsfehlern, ermöglicht hierbei insbesondere auch in solchen Fällen eine Nutzung der Wärmeabbildungstechnik, in denen eine Thermographie unter Nutzung der Eigenstrahlung des Metallbands aufgrund fehlender erforderlicher Temperatur des Metallbands nicht möglich ist.

Weiterhin kann beispielsweise vorgesehen sein, dass die Wärmequelle eine Wärmeabstrahlleistung aufweist, die an dem Erfassungsbereich einer Temperatur einer Wärmestrahlung in einem Bereich zwischen 35 Grad Celsius und 100 Grad Celsius entspricht. Bevorzugt wird eine Temperatur in einem Bereich zwischen 30 Grad Celsius und 75 Grad Celsius genutzt. Besonders bevorzugt wird eine Temperatur in einem Bereich zwischen 35 Grad Celsius und 60 Grad Celsius genutzt. In einem durchgeführten Versuch hat sich eine Temperatur von 50 Grad Celsius als praktikabel erwiesen, wodurch der Vorteil gegeben ist, dass zum einen aufgrund der in jedem Fall über der Umgebungstemperatur gewählten Temperatur die erläuterte Justierung ermöglicht wird, andererseits aber auch aufgrund der vergleichsweise geringen Temperatur der aufzuwendende zusätzliche Energieeinsatz nicht hoch ist. Insbesondere kann vorgesehen sein, dass die Wärmequelle eine Wärmeabstrahlleistung aufweist, die an dem Erfassungsbereich einer Temperatur entspricht, die wenigstens 10 Kelvin größer ist als die Temperatur des abzubildenden Metallbands.

Es ist vorgesehen, dass mittels der Wärmebildkamera eine Wärmeabbildung von der am Metallband und/oder am mit der Nassbeschichtung beschichteten Metallband reflektierten Wärmestrahlung der Wärmequelle angefertigt wird.

In einer weiteren Ausbildung des Verfahrens sind des Weiteren die folgenden Schritte vorgesehen:
- dass die Wärmeabbildung einer Bandposition erfasst wird,
- dass eine Änderung dT der gemessenen Temperatur entlang eines Profils ermittelt wird und
- eine Änderung dT gegen einen Referenzwert als Vergleichswert für einen Vergleich mit einer Justagetabelle genutzt wird für eine Ermittlung einer Dicke der Nassbeschichtung.
Bei einer Messung der Temperatur ist aufgrund der je nach Dicke der Nassbeschichtung unterschiedlichen gesamten Emissivität des Verbundes aus Metallband und Nassbeschichtung ein Maß für die Dicke der Nassbeschichtung. Hierbei muss nicht notwendigerweise die absolute Dicke der Nassbeschichtung dargestellt sein, sondern eine Beurteilung über Querprofil und/oder Längsprofil des Metallbands ist ausreichend, um ein Maß für die Qualitätsunterschiede innerhalb der Beschichtung einer Oberfläche zu erreichen.

In einer besonders bevorzugten Ausgestaltung wird die Wärmeabbildung der noch nassen oder feuchten Nassbeschichtung aufgenommen.

Da die Emissivität von Wasser, Öl, Lösemitteln sowie anderen Flüssigkeiten deutlich höher ist als die Emissivität von Metallen wird die gewünschte Abbildung von beschichteten und unbeschichteten Bereichen mittels der Wärmeabbildung enorm vereinfacht.

Ein weiterer, unabhängiger Gedanke der Erfindung sieht eine Metallbandbeschichtungsvorrichtung vor, welche eine als Nassbeschichtungsstation ausgebildete Beschichtungsstation zur Durchführung eines Metallbandes durch die Beschichtungsstation aufweist zur Beschichtung einer Oberfläche des Metallbandes mit einer Nassbeschichtung. Des Weiteren weist die Metallbandbeschichtungsvorrichtung eine Wärmebildkamera auf, die auf einen Erfassungsbereich gerichtet ist, der Erfassungsbereich unmittelbar hinter der Beschichtungsstation befindlich ist, bevorzugt der Erfassungsbereich die Beschichtungsstation wenigstens teilweise umfasst, wobei der Erfassungsbereich einen Teil der Oberfläche des Metallbandes umfasst. Bevorzugt umfasst der Erfassungsbereich die gesamte Breite des Metallbands.

Vorzugsweise ist die Metallbandbeschichtungsvorrichtung zur Durchführung des Eingangs erläuterten Verfahrens ausgebildet.

In einer weiteren Ausgestaltung der Erfindung weist die Metallbandbeschichtungsvorrichtung weiterhin eine Wärmequelle zur Abstrahlung von Wärmestrahlung zu dem Erfassungsbereich auf, um über eine Erfassung der mittels der Wärmequelle herbeigeführten Reflexion an der Oberfläche des Metallbandes eine auswertbare Wärmeabbildung vorzunehmen.

Bevorzugt umfasst der Erfassungsbereich die gesamte Breite des Metallbands.

Des Weiteren wird eine Verwendung einer Metallbandbeschichtungsvorrichtung der erläuterten Art und Weise zur Beschichtung von Metallband mit einer Nassbeschichtung mit in-situ Wärmeabbildung der mit der Nassbeschichtung beschichteten Oberfläche sowie Ermittlung von einem Bandabschnitt mit Beschichtungsfehler vorgeschlagen, wobei der Bandabschnitt mit Beschichtungsfehler nach der Ermittlung nachverfolgbar registriert wird.

In einer besonders bevorzugten Ausgestaltung wird eine Verwendung einer Metallbandbeschichtungsvorrichtung der erläuterten Art und Weise zur Beschichtung von Metallband mit einer Nassbeschichtung mit in-situ Wärmeabbildung der mit der Nassbeschichtung beschichteten Oberfläche, wobei die Wärmeabbildung der noch nassen oder feuchten Nassbeschichtung aufgenommen wird, sowie Ermittlung von einem Bandabschnitt mit Beschichtungsfehler vorgeschlagen, wobei der Bandabschnitt mit Beschichtungsfehler nach der Ermittlung nachverfolgbar registriert wird.

Der Begriff des Beschichtungsfehlers umfasst hierbei die Möglichkeiten
- eines Bereichs ohne Beschichtung oder
- eines Bereichs mit einer Beschichtung mit einer von einer Solldicke abweichenden Schichtdicke.

Im Folgenden werden konkrete Ausgestaltungen der Erfindung mit Bezugnahme auf die Figuren im Detail näher erläutert. Die Figuren und begleitende Beschreibung der resultierenden Merkmale sind nicht beschränkend auf die jeweiligen Ausgestaltungen zu lesen, dienen jedoch der Illustration beispielhafter Ausbildungen der Erfindung. Weiterhin können die jeweiligen Merkmale untereinander wie auch mit Merkmalen der obigen Beschreibung genutzt werden für eine mögliche Fortentwicklung und Verbesserung der Erfindung, speziell bei zusätzlichen Ausgestaltungen, die nicht dargestellt sind.

Die Figuren zeigen:
Figs. 1a und 1b: eine schematische Darstellung einer Metallbandbeschichtungsvorrichtung;
Fig. 2: unterschiedliche Darstellungen von im Laufe eines Verfahrens zur Beschichtung einer Oberfläche eines Metallbandes mittels Erfassung einer Wärmeabgabe der mit der Nassbeschichtung beschichteten Oberfläche angefertigten Wärmeabbildung:
   a) erste Wärmeabbildung,
   b) zweite Wärmeabbildung,
   c) dritte Wärmeabbildung,
   d) vierte Wärmeabbildung.

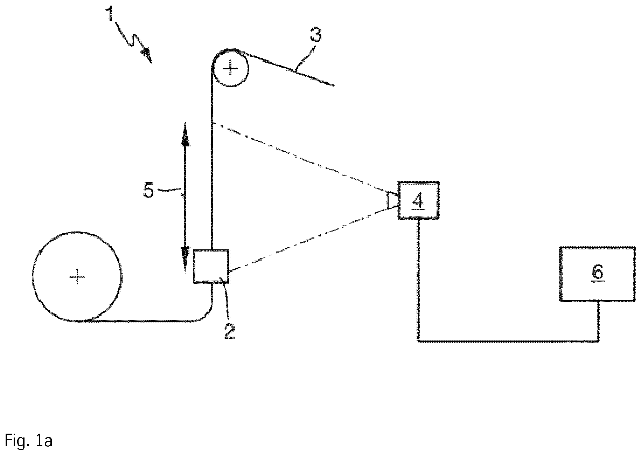

Fig. 1a ist eine Metallbandbeschichtungsvorrichtung 1 zu entnehmen. Die Metallbandbeschichtungsvorrichtung 1 umfasst eine als Nassbeschichtungsstation ausgebildete Beschichtungsstation 2. Durch die Beschichtungsstation 2 wird ein Metallband 3 durchgeführt und in der Beschichtungsstation 2 mit einer Nassbeschichtung beschichtet. In einem Bereich, welcher von dem Metallband nach der Beschichtung durchlaufen wird, ist ein Erfassungsbereich 5 befindlich, welcher mit einer Wärmebildkamera 4 erfasst wird. Im Nachgang hierzu wird das Metallband weiterhin getrocknet (nicht gezeigt). Die Wärmebildkamera 4 ermittelt die zweidimensionale Temperaturverteilung des durchlaufenden Metallbandes unmittelbar nach der Benetzung der Bandoberfläche durch die Auftragsrollen. An der Wärmebildkamera 4 ist eine Recheneinheit 6 angeordnet, die mittels Computerprogrammprodukt eine Erfassen der Wärmeabgabe der beschichteten Oberfläche sowie eine Auswertung der erfassten Wärmeabbildung veranlasst.

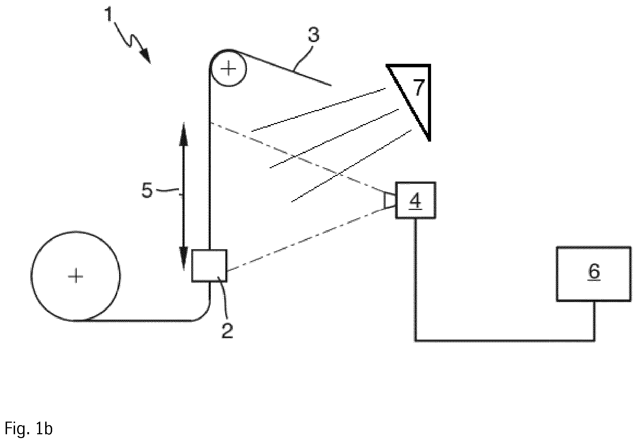

Die in Fig. 1b gezeigte Anordnung unterscheidet sich von der in Fig. 1a gezeigten Anordnung lediglich dadurch, dass zusätzlich noch eine Wärmequelle (7) zur Abstrahlung von Wärmestrahlung zu dem Erfassungsbereich angeordnet ist.

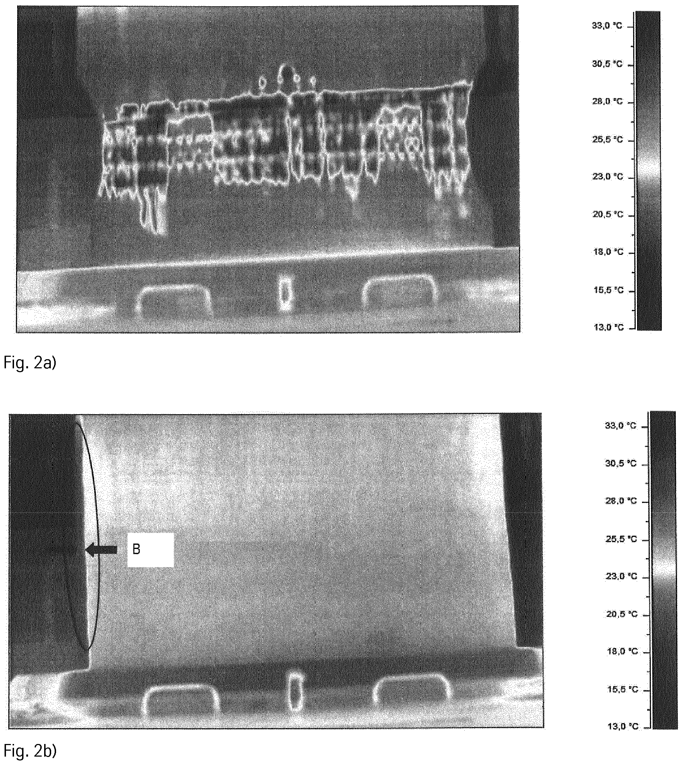

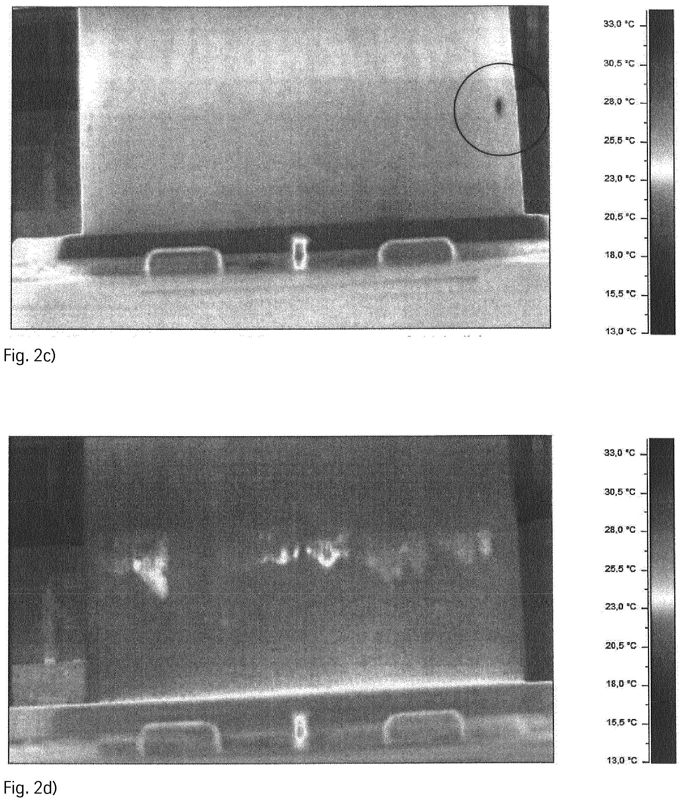

In den Figuren der Figur 2 ist beispielhaft eine Abfolge von mittels der Wärmebildkamera aufgenommenen Wärmeabbildungen dargestellt, wobei die Metallbänder produktionsbedingt eine Temperatur von 50 Grad Celsius aufwiesen. Hintereinander beschichtete Metallbänder sind mittels einer Heftnaht miteinander verbunden. Damit es nicht zu Beschädigungen der Auftragsrollen kommt, werden diese unmittelbar vor Eintreffen der Heftnaht vom Band abgehoben bzw. zurückgefahren und nach Durchlauf der Heftnaht wieder aufs Band aufgesetzt. Das Band ist somit unmittelbar vor und hinter der Heftnaht unbeschichtet. Dieser Übergang, beschichtet- unbeschichtet, wurde mit der Wärmebildkamera betrachtet und aufgezeichnet.

Es zeigen:
Figur 2a zeigt eine teilweise nasse durchlaufende Heftnaht mit Feuchteresten des vorherigen Reinigungs- und Spülvorganges. Nach Wiederaufsetzen der Benetzungsrolle erfolgt wieder eine gleichmäßige Beschichtung. Wie jedoch Figur 2b zeigt, ist in einem Kantenbereich der linken Seite ein von der Nassbeschichtung unbenetzter Bereich (A) gezeigt bzw. zu erkennen. In der dargestellten Wärmeabbildung ist aufgrund der sowohl für die Nassbeschichtung als auch im trockenen Bereich genutzten gleichen Skala als Folge der unterschiedlichen Emissivitäten der unbenetzte Bereich als kälterer Bereich dargestellt. Hierbei handelt es sich gleichwohl lediglich um die Darstellung, da die tatsächliche Temperatur identisch ist. Die tatsächliche Temperatur ist hier jedoch weder eindeutig bestimmbar noch erforderlich, stattdessen erfolgt die Erfassung mittels Wärmeabbildung, wie erläutert, zur Identifizierung von unbenetzten Bereichen. In einer weiteren Darstellung, Darstellung c) ist in einem eingekreisten Bereich ein Temperaturspot zu sehen, welcher als Bereich höherer Dicke dargestellt ist. Dieser dargestellte Spot zeigt qualitativ eine Unregelmäßigkeit in der Dicke der Beschichtung. Die Darstellung der Figur d) zeigt feuchte Rückstände, welche als Bereiche niedrigerer Temperatur dargestellt sind.

## Patentansprüche

1. Verfahren zur Beschichtung einer Oberfläche eines Metallbands (3), wobei das Verfahren die folgenden Schritte aufweist:
- Beschichten der Oberfläche eines Metallbands (3) mit einer Nassbeschichtung mittels einer Beschichtungsstation (2),
- Befördern des Metallbands (3) mittels einer Metallbandbeförderungsvorrichtung,
**gekennzeichnet durch** Erfassung einer mit der Nassbeschichtung beschichteten Oberfläche mittels einer Anfertigung einer Wärmeabbildung eines Erfassungsbereichs (5), der einen Teil der Oberfläche umfasst, wobei der Erfassungsbereich (5) unmittelbar hinter der Beschichtungsstation (2) befindlich ist, bevorzugt der Erfassungsbereich (5) die Beschichtungsstation (2) wenigstens teilweise umfasst.

2. Verfahren nach Anspruch 1, **dadurch gekennzeichnet, dass** die Wärmeabbildung in einem Spektralbereich aufgenommen wird, der wenigstens eine Wellenlänge zwischen 1 Mikrometern und 20 Mikrometern umfasst, bevorzugt wenigstens eine Wellenlänge zwischen 7 Mikrometern und 20 Mikrometern umfasst.

3. Verfahren nach einem der vorhergehenden Ansprüche, **dadurch gekennzeichnet, dass** der Erfassungsbereich (5) eine gesamte Breitenerstreckung des Metallbands umfasst.

4. Verfahren nach einem der vorhergehenden Ansprüche, **dadurch gekennzeichnet,**
- **dass** die Wärmeabbildung als kontinuierlicher Wärmeabbildungsfilm erstellt wird,
- **dass** ein Filmabschnitt des Wärmeabbildungsfilms einem Bandabschnitt des Metallbandes (3) zuordenbar erstellt wird und/oder
- **dass** ein Filmabschnitt des Wärmeabbildungsfilms einem Metallband (3) zuordenbar erstellt wird.

5. Verfahren nach Anspruch 4, **dadurch gekennzeichnet, dass** eine kontinuierliche Abfrage der Wärmeabbildung auf eine Temperaturdifferenz hin erfolgt und bei einer Feststellung einer Temperaturdifferenz, die größer ist als eine Referenzdifferenz, ein Markierungswert ausgegeben wird, der einem Bandabschnitt des Metallbands (3) zugeordnet wird und/oder der einer Bandrolle zugeordnet wird.

6. Verfahren nach Anspruch 5, **dadurch gekennzeichnet, dass** die Referenzdifferenz weniger als 5,0 K beträgt, bevorzugt weniger als 2,0 K beträgt und/oder dass die Referenzdifferenz einstellbar ist.

7. Verfahren nach einem der Ansprüche 4 bis 6, **dadurch gekennzeichnet, dass** die kontinuierliche Abfrage in-situ erfolgt.

8. Verfahren nach einem der vorhergehenden Ansprüche, **dadurch gekennzeichnet, dass** ein in dem Erfassungsbereich (5) befindlicher Teil der Oberfläche des mit der Nassbeschichtung beschichteten Metallbands (3) mit einer Wärmequelle bestrahlt wird.

9. Verfahren nach Anspruch 8, **dadurch gekennzeichnet, dass** die Wärmequelle eine Wärmeabstrahlleistung aufweist, die an dem Erfassungsbereich einer Temperatur in einem Bereich zwischen 35 Grad Celsius und 100 Grad Celsius entspricht, bevorzugt zwischen 30 Grad Celsius und 75 Grad Celsius, besonders bevorzugt zwischen 35 Grad Celsius und 60 Grad Celsius entspricht.

10. Verfahren nach einem der Ansprüche 1 bis 9, **dadurch gekennzeichnet, dass**
- die Wärmeabbildung einer Bandposition erfasst wird,
- eine Änderung dT der gemessenen Temperatur entlang eines Profils ermittelt wird, und
- die Änderung dT gegen einen Referenzwert als Vergleichswert für einen Vergleich mit einer Justagetabelle genutzt wird für eine Ermittlung einer Dicke der Nassbeschichtung.

11. Verfahren nach einem der vorhergehenden Ansprüche 1 bis 10, **dadurch gekennzeichnet, dass** die Wärmeabbildung der noch nassen oder feuchten Nassbeschichtung aufgenommen wird.

12. Metallbandbeschichtungsvorrichtung (1), aufweisend
eine als Nassbeschichtungsstation ausgebildete Beschichtungsstation (2) zur Durchführung eines Metallbands (3) durch die Beschichtungsstation (2) und zur Beschichtung einer Oberfläche des Metallbands mit einer Nassbeschichtung,
**gekennzeichnet durch** eine Wärmebildkamera (4), die auf einen Erfassungsbereich gerichtet ist, der Erfassungsbereich (5) unmittelbar hinter der Beschichtungsstation (2) befindlich ist, bevorzugt der Erfassungsbereich (5) die Beschichtungsstation (2) wenigstens teilweise umfasst,
wobei der Erfassungsbereich (5) einen Teil der Oberfläche des Metallbands umfasst.

13. Metallbandbeschichtungsvorrichtung nach Anspruch 12, weiterhin aufweisend eine Wärmequelle (7) zur Abstrahlung von Wärmestrahlung zu dem Erfassungsbereich.

14. Metallbandbeschichtungsvorrichtung nach Anspruch 12 oder nach Anspruch 13 mit in-situ Wärmeabbildung einer mit der Nassbeschichtung beschichteten Oberfläche.

15. Verfahren nach Anspruch 1 unter Verwendung einer Metallbandbeschichtungsvorrichtung nach Anspruch 14 zur Beschichtung von Metallband mit einer Nassbeschichtung mit in-situ Wärmeabbildung einer mit der Nassbeschichtung beschichteten Oberfläche und Ermittlung von einem Bandabschnitt mit Beschichtungsfehler, wobei der Bandabschnitt mit Beschichtungsfehler nach der Ermittlung nachverfolgbar registriert wird.

## Claims

1. Method for coating a surface of a metal strip (3), the method comprising the following steps:
- coating the surface of a metal strip (3) with a wet coating by means of a coating station (2),
- conveying the metal strip (3) by means of a metal strip-conveying device,
**characterized by**
- detecting a surface coated with the wet coating by producing a thermal image of a detection region (5) which comprises part of the surface, the detection region (5) being located directly downstream of the coating station (2), preferably the detection region (5) at least partially comprising the coating station (2) .

2. Method according to Claim 1, **characterized in that** the thermal image is recorded in a spectral range which comprises at least a wavelength between 1 micrometre and 20 micrometres, preferably at least a wavelength between 7 micrometres and 20 micrometres.

3. Method according to one of the preceding claims, **characterized in that** the detection region (5) comprises an entire widthwise extent of the metal strip.

4. Method according to one of the preceding claims, **characterized**
- **in that** the thermal image is produced as a continuous thermal imaging film,
- **in that** a portion of film of the thermal imaging film is produced in such a way that it can be assigned to a portion of strip of the metal strip (3) and/or
- **in that** a portion of film of the thermal imaging film is produced in such a way that it can be assigned to a metal strip (3).

5. Method according to Claim 4, **characterized in that** the thermal image is continuously scanned for a temperature difference and, if a temperature difference that is greater than a reference difference is found, there is output a marking value which is assigned to a portion of strip of the metal strip (3) and/or to a roll of strip.

6. Method according to Claim 5, **characterized in that** the reference difference is less than 5.0 K, preferably less than 2.0 K and/or **in that** the reference difference can be set.

7. Method according to one of Claims 4 to 6, **characterized in that** the continuous scanning is performed in situ.

8. Method according to one of the preceding claims, **characterized in that** a part of the surface of the metal strip (3) coated with the wet coating that is located in the detection region (5) is irradiated with a heat source.

9. Method according to Claim 8, **characterized in that** the heat source has a thermal radiation output which in the detection region corresponds to a temperature in a range between 35 degrees Celsius and 100 degrees Celsius, preferably between 30 degrees Celsius and 75 degrees Celsius, particularly preferably between 35 degrees Celsius and 60 degrees Celsius.

10. Method according to one of Claims 1 to 9, **characterized in that**
- the thermal image of a position of the strip is recorded,
- a change dT of the measured temperature along a profile is ascertained, and
- the change dT with respect to a reference value is used as a comparative value for a comparison with an adjustment table, for an ascertainment of a thickness of the wet coating.

11. Method according to one of the preceding Claims 1 to 10, **characterized in that** the thermal image of the still wet or moist wet coating is recorded.

12. Metal strip-coating device (1), comprising
a coating station (2), formed as a wet coating station, for a metal strip (3) to be passed through the coating station (2) and for coating a surface of the metal strip with a wet coating,
**characterized by**
a thermal imaging camera (4), which is directed at a detection region, the detection region (5) being located directly downstream of the coating station (2), preferably the detection region (5) at least partially comprising the coating station (2).

13. Metal strip-coating device according to Claim 12, also comprising a heat source (7) for emitting thermal radiation to the detection region.

14. Metal strip-coating device according to Claim 12 or according to Claim 13, comprising in-situ thermal imaging of a surface coated with the wet coating.

15. Method according to Claim 1, using a metal strip-coating device according to Claim 14 for coating metal strip with a wet coating, comprising in-situ thermal imaging of a surface coated with the wet coating and ascertainment of a portion of strip with coating defects, the portion of strip with coating defects being traceably registered after the ascertainment.

## Revendications

1. Procédé pour recouvrir une surface d'une bande métallique (3), le procédé comprenant les étapes suivantes consistant à :
- recouvrir la surface d'une bande métallique (3) d'un revêtement par voie humide au moyen d'un poste de revêtement (2),
- transporter la bande métallique (3) au moyen d'un dispositif de transport de bande métallique,
**caractérisé par** la détection d'une surface recouverte du revêtement par voie humide au moyen de la réalisation d'une représentation par imagerie thermique d'une zone de détection (5) comprenant une partie de la surface, la zone de détection (5) se trouvant directement après le poste de revêtement (2), la zone de détection (5) comprenant de préférence le poste de revêtement (2) au moins en partie.

2. Procédé selon la revendication 1, **caractérisé en ce que** la représentation par imagerie thermique est enregistrée dans une zone spectrale comprenant au moins une longueur d'onde entre 1 micromètre et 20 micromètres, de préférence au moins une longueur d'onde entre 7 micromètres et 20 micromètres.

3. Procédé selon l'une quelconque des revendications précédentes, **caractérisé en ce que** la zone de détection (5) comprend une étendue de largeur totale de la bande métallique.

4. Procédé selon l'une quelconque des revendications précédentes, **caractérisé en ce que**
- la représentation par imagerie thermique est réalisée sous forme de film d'imagerie thermique en continu,
- une partie de film du film d'imagerie thermique est réalisée de manière à pouvoir être associée à une partie de bande de la bande métallique (3), et/ou
- une partie de film du film d'imagerie thermique est réalisée de manière à pouvoir être associée à une bande métallique (3).

5. Procédé selon la revendication 4, **caractérisé en ce qu'**une interrogation continue de la représentation par imagerie thermique a lieu suite à une différence de température, et lorsqu'une différence de température est établie qui est supérieure à une différence de référence, une valeur de marquage est délivrée qui est associée à une partie de bande de la bande métallique (3) et/ou qui est associée à un rouleau de bande.

6. Procédé selon la revendication 5, **caractérisé en ce que** la différence de référence est inférieure à 5,0 K, de préférence inférieure à 2,0 K et/ou **en ce que** la différence de référence est réglable.

7. Procédé selon l'une quelconque des revendications 4 à 6, **caractérisé en ce que** l'interrogation continue a lieu in situ.

8. Procédé selon l'une quelconque des revendications précédentes, **caractérisé en ce qu'**une partie de la surface de la bande métallique (3) recouverte du revêtement par voie humide, qui se trouve dans la zone de détection (5), est irradiée par une source de chaleur.

9. Procédé selon la revendication 8, **caractérisé en ce que** la source de chaleur présente une puissance de rayonnement thermique correspondant au niveau de la zone de détection à une température dans une plage entre 35 degrés Celsius et 100 degrés Celsius, de préférence entre 30 degrés Celsius et 75 degrés Celsius, de plus grande préférence entre 35 degrés Celsius et 60 degrés Celsius.

10. Procédé selon l'une quelconque des revendications précédentes 1 à 9, **caractérisé en ce que**
- la représentation par imagerie thermique d'une position de bande est détectée,
- une variation dT de la température mesurée le long d'un profil est déterminée, et
- la variation dT par rapport à une valeur de référence est utilisée comme une valeur comparative pour une comparaison à un tableau d'ajustage pour déterminer une épaisseur du revêtement par voie humide.

11. Procédé selon l'une quelconque des revendications précédentes 1 à 10, **caractérisé en ce que** la représentation par imagerie thermique du revêtement par voie humide toujours mouillé ou humide est enregistrée.

12. Dispositif de revêtement de bande métallique (1), comportant
un poste de revêtement (2) réalisé comme un poste de revêtement par voie humide pour faire passer une bande métallique (3) à travers le poste de revêtement (2) et pour recouvrir une surface de la bande métallique avec un revêtement par voie humide,
**caractérisé par** une caméra thermique (4) orientée sur une zone de détection, dans lequel la zone de détection (5) se trouve directement après le poste de revêtement (2), la zone de détection (5) comprend de préférence le poste de revêtement (2) au moins en partie, et la zone de détection (5) comprend une partie de la surface de la bande métallique.

13. Dispositif de revêtement de bande métallique selon la revendication 12, comportant en outre une source de chaleur (7) pour irradier un rayonnement thermique en direction de la zone de détection.

14. Dispositif de revêtement de bande métallique selon la revendication 12 ou 13 avec une représentation par imagerie thermique in situ d'une surface recouverte du revêtement par voie humide.

15. Procédé selon la revendication 1 utilisant un dispositif de revêtement de bande métallique selon la revendication 14 pour recouvrir une bande métallique d'un revêtement par voie humide avec une représentation par imagerie thermique in situ d'une surface recouverte du revêtement par voie humide, et la détermination d'une partie de bande présentant des défauts de revêtement, la partie de bande présentant des défauts de revêtement étant enregistrée de manière traçable après la détermination.
